# EUROPÄISCHE PATENTSCHRIFT

(11) **EP 2 947 417 B1**
(45) Veröffentlichungstag und Bekanntmachung des Hinweises auf die Patenterteilung: **18.12.2019**
(21) Anmeldenummer: 14169576.7
(22) Anmeldetag: 23.05.2014
(51) Int. Cl.: G01B 9/02, A61C 9/00, A61C 13/08, G01J 3/50, G01B 11/24

(54) **Vorrichtung und Verfahren zum Erfassen einer 3D-Struktur eines Objekts**
Device and method for detecting a 3D structure of an object
Dispositif et procédé d'enregistrement d'une structure 3D d'un objet

(43) Veröffentlichungstag der Anmeldung: 25.11.2015
(73) Patentinhaber: VOCO GmbH, 27472 Cuxhaven (DE)
(72) Erfinder: Knüttel, Dr. Alexander, 68519 Viernheim (DE)
(74) Vertreter: Durm Patentanwälte PartG mbB

(56) Entgegenhaltungen:
- EP-A1- 2 796 938
- US-A1- 2011 292 402
- US-A1- 2013 302 746
- FENG S ET AL: "Single-exposure color digital holography", PROCEEDINGS OF SPIE, S P I E - INTERNATIONAL SOCIETY FOR OPTICAL ENGINEERING, US, Bd. 7848, 1. Januar 2010 (2010-01-01), Seiten 784826-1, XP009155317, ISSN: 0277-786X ISBN: 978-0-8194-9914-1

## Beschreibung

Die vorliegende Erfindung betrifft eine Vorrichtung zum Erfassen einer 3D-Struktur eines Objekts umfassend, mindestens drei Laser-Emitter, optische Einrichtungen, einen Detektor und eine Auswerteeinrichtung.

Die Laser-Emitter erzeugen jeweils Laserstrahlung mit einer Wellenlänge, wobei sich die Wellenlängen der ausgesendeten Laserstrahlung voneinander unterscheiden. Wenigstens zwei der Laser-Emitter senden Laserstrahlung im nicht-sichtbaren Bereich aus. Wenigstens eine der optischen Einrichtungen ist ein Strahlteiler, der die Laserstrahlung der Laser-Emitter jeweils in eine Referenzstrahlung und eine Beleuchtungsstrahlung aufteilt, wobei die Beleuchtungsstrahlung auf das zu vermessende Objekt trifft, von dem Objekt als Objektstrahlung reflektiert wird und mit der Referenzstrahlung interferiert. Der Detektor nimmt die durch die Interferenz der Referenzstrahlung und Objektstrahlung entstehenden Interferenzmuster auf. Die Auswerteeinrichtung ist mit dem Detektor verbunden und dient zur Auswertung der aufgenommenen Interferenzmuster. Die Auswerteeinrichtung ist ausgebildet ausgebildet, das Objekt basie-rend auf den Interferenzmustern der nicht-sichtbaren Laserstrahlung dreidimensional zu erfassen.

Derartige Vorrichtungen kommen beispielsweise in der Zahnmedizin zum Einsatz. Sie werden dazu eingesetzt, Objekte, wie einen Zahn, Teile eines Kiefers oder einen kompletten Kiefer dreidimensional zu erfassen. Die zur Herstellung von Gebiss- und Kiefermodellen notwendigen Maße können so berührungslos erfasst werden. Das Entnehmen von Abdrücken direkt am Patienten entfällt damit vollständig.

Aus der EP 2796938 A1 ist eine solche Vorrichtung bekannt. Sie arbeitet nach dem Prinzip der digitalen Holographie. Die Vorrichtung umfasst mindestens zwei Laser-Emitter, die Laserstrahlung mit unterschiedlichen Wellenlängen aussenden. Die Laserstrahlung jedes Laser-Emitters wird mithilfe eines Strahlteilers in Referenz- und Objektstrahlung aufgeteilt. Während die Referenzstrahlung über eine Spiegelanordnung auf einen Detektor gelenkt wird, trifft die Beleuchtungsstrahlung auf das zu erfassende Objekt, wird von diesem als Objektstrahlung reflektiert und ebenfalls auf den Detektor geleitet. Referenz- und Objektstrahlung einer Wellenlänge interferieren miteinander. Die daraus entstehenden Referenzmuster werden durch den Detektor aufgenommen. Anhand von Interferenzmustern, die durch Laserstrahlung von unterschiedlichen Laser-Emittern entstehen, kann die dreidimensionale Struktur des zu vermessenden Objekts erfasst werden. Die Farbe des Objekts kann jedoch nicht detektiert werden, da bevorzugt Licht aus dem nahen Infrarotbereich eingesetzt wird.

Die Verwendung von farbigen Laser-Emittern ist allgemein aus der US 2011/0292402 A1 bekannt, die auf das farbige Erkennen von Objekten gerichtet ist.

Es ist daher Aufgabe der vorliegenden Erfindung, eine Vorrichtung zum Erfassen einer 3D-Struktur eines Objekts bereitzustellen, mit der die Farbe des zu erfassenden Objekts ermittelt werden kann.

Bei der Lösung dieser Aufgabe wird von einer Vorrichtung gemäß dem Oberbegriff des Anspruchs 1 ausgegangen. Gelöst wird die Aufgabe durch die im Kennzeichen des Anspruchs 1 angegebenen konstruktiven Merkmale. Wenigstens einer der Laser-Emitter ist ein Farblaser, der farbige Laserstrahlung aussendet. Die Auswerteeinrichtung ist derart ausgebildet, um anhand der Intensität der vom Objekt reflektierten farbigen Objektstrahlung auf die Farbe des Objekts zu schließen. Dies erfolgt, indem mittels der Auswerteeinrichtung die zumindest eine Farbkomponente des Objekts erkannt wird, die der Farbe der farbigen Laserstrahlung entspricht. Die Wellenlänge der reflektierten Objektstrahlung gleicht also der Wellenlänge der erkannten Farbkomponente des Objekts. Sendet der Farblaser beispielsweise blaue Laserstrahlung aus und liegt die Intensität der reflektierten blauen Objektstrahlung bei annähernd 100 Prozent, wird erkannt, dass das zu vermessende Objekt eine blaue Farbe aufweist. Werden mehrere Farblaser mit unterschiedlich farbiger Laserstrahlung verwendet, werden entsprechend der Anzahl der Farblaser unterschiedliche Farbkomponenten des Objekts erkannt. Durch Kombination der einzelnen Farbkomponenten kann dann auf die Farbe des Objekts geschlossen bzw. diese ermittelt werden. Je mehr Farblaser zum Einsatz kommen, desto höher ist die Genauigkeit bei der Bestimmung der Objektfarbe.

Auf ihrem Weg in Richtung des Detektors interferieren die farbige Referenz- und Objektstrahlung des Farblasers miteinander. Aus den von dem Detektor aufgenommenen Interferenzmustern kann auf die Position des Objektpunkts geschlossen werden, von dem aus die Objektstrahlung in Richtung des Detektors reflektiert wurde. Die hierzu notwendige Auswertung der Interferenzmuster erfolgt analog zu der in der EP 2796938 A1 beschriebenen Auswertung der nicht-sichtbaren Laserstrahlung. Somit können unterschiedlichen Objektpunkten unterschiedliche Farben zugeordnet werden. Beispielsweise lassen sich so im Mundinnenraum Zähne und Zahnfleisch farblich unterscheiden. Im Vergleich zu der in der EP 2796938 A1 beschriebenen Auswertung werden im vorliegenden Fall keine Tiefeninformationen aus den Interferenzmustern der farbigen Laserstrahlung gewonnen. Dadurch wird die Auswertung vereinfacht. Erfindungsgemäß umfasst die Vorrichtung zwei Emitter-Arrays, wobei die Laser-Emitter, die nicht-sichtbare Laserstrahlung aussenden, Teil eines ersten Emitter-Arrays und bevorzugt der wenigstens eine Farblaser Teil eines zweiten Emitter-Arrays sind. Bevorzugt sind die Laser-Emitter eines Arrays voneinander beabstandet auf einem Emitter-Chip angeordnet. Jeder Laser-Emitter, der nicht-sichtbare Laserstrahlung aussendet, sendet Laserstrahlung mit einer zu seinem benachbarten Laser-Emitter leicht unterschiedlichen Wellenlänge aus. Beispielsweise unterscheiden sich die Wellenlängen zweier benachbarter Laser-Emitter um 1 nm. Durch die voneinander beabstandete Anordnung der Laser-Emitter trifft die Referenzstrahlung der Laser-Emitter mit unterschiedlichen Winkeln auf den Detektor auf. Auch die Beleuchtungsstrahlung fällt mit unterschiedlichen Einfallswinkeln auf das zu erfassende Objekt. Dadurch können die einzelnen Interferenzmuster den jeweiligen Laser-Emittern zugeordnet werden.

Erfindungsgemäß ist der wenigstens eine Farblaser in dem zweiten Emitter-Array in einer Position angeordnet, die zu einer unbesetzten Position für einen Laser-Emitter in dem ersten Emitter-Array konjugiert ist. Indem der Farblaser zu einer unbesetzten Position in dem ersten Emitter-Array konjugiert angeordnet ist, werden Doppeldeutigkeiten bei der Auswertung der Interferenzmuster vermieden. Im Rahmen der vorliegenden Anmeldung werden zwei Positionen als konjugiert definiert, wenn sich die von diesen Positionen ausgesandte Laserstrahlungen im weiteren Strahlverlauf überlagern, d.h. die jeweiligen Referenzstrahlungen deckungsgleich und die jeweilige Beleuchtungsstrahlungen deckungsgleich sind. Im vorliegenden Fall ist eine Position in dem ersten Emitter-Array zu einer Position in dem zweiten Emitter-Array konjugiert, wenn sich die ausgesendete Strahlung deckungsgleich überlagert.

Es ist ebenso denkbar, dass die Position eines Farblasers im zweiten Emitter-Array zu einem Laser-Emitter auf dem ersten Emitter-Array konjugiert angeordnet ist. In diesem Fall müssen die jeweiligen Laser-Emitter derart angesteuert werden, dass entweder der Farblaser oder der hierzu konjugiert angeordnete Laser-Emitter im ersten Emitter-Array Laserstrahlung aussendet. Nur so können Doppeldeutigkeiten bei der Auswertung der Interferenzmuster vermieden werden. Bevorzugt ist deshalb eine Position in dem ersten Emitter-Array leer, wenn an der konjugierten Position in dem zweiten Emitter-Array ein Farblaser angeordnet ist und dieser farbige Laserstrahlung aussendet oder aussenden soll.

Die erfindungsgemäße Vorrichtung kann optional auch dazu verwendet werden, bereits bekannte Objektfarben wiederzuerkennen. Dies erfolgt, indem eine erste Referenzmessung an einem Referenzobjekt mit bekannter Objektfarbe durchgeführt wird. Die ermittelte Intensität der reflektierten farbigen Objektstrahlung wird gemessen und gespeichert. Somit kann bei nachfolgenden Messungen durch Vergleich des gespeicherten Intensitätswerts mit dem dann neu erfassten Intensitätswert überprüft werden, inwieweit das aktuell gemessene Objekt diese bestimmte Farb-Komponente des Referenzobjektes beinhaltet. So lassen sich auch Bereiche unterschiedlicher Farbe innerhalb eines Objektes unterscheiden, auch wenn nur ein Farblaser vorhanden ist.

Als Referenzobjekte können auch Farbwerte einer Farbskala, insbesondere der Vita-Farbskala, verwendet werden. Wird die Vorrichtung beispielsweise als Dentalscanner eingesetzt, kann so die Farbe eines Zahns einem Farbwert der Vita-Farbskala zugeordnet werden. Es ist auch denkbar, die gemessenen Intensitätswerte für sämtliche Farbwerte der Vita-Farbskala auf einem Speichermedium zu speichern. Diese können dann mit Intensitätswerten, die an Zähnen eines Patienten ermittelt wurden, verglichen werden.

Bevorzugt strahlen die Laser-Emitter, die Laserstrahlung im nicht-sichtbaren Bereich aussenden, Laserstrahlung im nahen Infrarot aus. Diese sind sehr verbreitet und können daher kostengünstig bezogen werden. Im Rahmen der vorliegenden Anmeldung werden unter dem nahen Infrarotbereich Wellenlängen von 780 nm bis 1400 nm verstanden. Es versteht sich, dass auch Laser-Emitter verwendet werden können, die Laserstrahlung im nicht-sichtbaren Bereich aussenden, allerdings außerhalb des nahen Infrarotbereichs. Beispielsweise kann die Laserstrahlung Wellenlängen im Infrarotbereich, d.h. mit Wellenlängen von 1400 nm bis 15000 nm aufweisen.

Optional sendet mindestens ein Farblaser Laserstrahlung mit einer der Grundfarben aus. Im Rahmen der Erfindung werden unter dem Begriff Grundfarben die Farben Rot, Grün und Blau verstanden, wie sie für den RGB-Farbraum verwendet werden. Durch Mischen der drei Grundfarben (Rot, Grün und Blau) kann jede beliebige Farbe dargestellt werden. Im Umkehrschluss bedeutet dies, dass in jeder beliebigen Farbe zumindest eine der Grundfarben enthalten ist. Sendet ein Farblaser Laserstrahlung mit einer Grundfarbe aus, so kann zumindest diese Grundfarbe am zu vermessenden Objekt erkannt werden. Im Rahmen der vorliegenden Erfindung wird unter der Farbe Blau Strahlung mit jedenfalls einer Wellenlänge von ca. 400 nm bis 470 nm, unter der Farbe Grün Strahlung mit jedenfalls einer Wellenlänge von ca. 500 nm bis 580 nm und unter der Farbe Rot Strahlung mit jedenfalls einer Wellenlänge von ca. 600 nm bis 670 nm verstanden.

Besonders bevorzugt ist eine Ausführungsform, bei der der wenigstens eine Farblaser blaues Licht oder grünes Licht aussendet. Optional werden zusätzlich zu den Intensitäten der am Objekt reflektierten Objektstrahlung des Farblasers auch die Intensitäten der Objektstrahlung einer der im nahen Infrarot sendenden Laser-Emitter verwendet, um auf die Farbe des zu erfassenden Objekts zu schließen. Laser-Emitter, die Laserstrahlung im nahen Infrarotbereich aussenden, können zur Bestimmung der Farbe des zu erfassenden Objekts verwendet werden, da die Laserstrahlung einen Rotanteil enthält. Insofern kann eine Laserquelle, die Laserstrahlung im nahen Infrarot emittiert als Ersatz für einen Farblaser verwendet werden, der rotes Licht aussendet.

Durch Verwendung eines Farblasers, der blaues Licht aussendet, zusammen mit einem Laser-Emitter, der Laserstrahlung im nahen Infrarotbereich emittiert, können somit die Ränder des Farbspektrums (Blau bis Rot) erfasst werden. Wird zusätzlich ein Farblaser mit grüner Laserstrahlung verwendet, kann annähernd das gesamte Farbspektrum zwischen den Farben Blau und Rot erfasst werden. Allerdings ist unter Verwendung eines einzigen Farblasers in Kombination mit einem Laser-Emitter aus dem nahen Infrarot keine eindeutige Bestimmung der Objektfarbe möglich. Es kann dennoch anhand der enthaltenen Farbanteile (Blau bzw. Grün und Rot) auf eine Farbzusammensetzung der grundsätzlich vorbekannten Objektfarbe geschlossen werden. Wird die Vorrichtung beispielsweise zum Erfassen von Zähnen und Zahnfleisch, also im Mundinnenbereich eines Patienten, verwendet, so kann zwischen der weißlichen Färbung der Zähne und der rötlichen Färbung des Zahnfleischs unterschieden werden. Da die Farbe Weiß einen gewissen Blauanteil aufweisen, kann mithilfe eines blauen Farblasers das Weiß der Zähne erkannt werden. Mittels des Rotanteils des Laser-Emitters im nahen Infrarot kann auf den Rotanteil im Zahnfleisch geschlossen werden.

Vorteilhafterweise umfasst die Vorrichtung mindestens vier Laser-Emitter, wobei wenigstens zwei Laser-Emitter als Farblaser ausgebildet sind, und wobei der eine Farblaser blaues und der andere Farblaser grünes Licht aussendet. Wird ein Laser-Emitter, der Laserstrahlung im nahen Infrarot aussendet, als Ersatz für rotes Licht verwendet, ist eine konkrete Farbbestimmung der Objektfarbe möglich. Laserstrahlung aller Grundfarben des RGB-Farbraums kann auf das zu erfassende Objekt gerichtet werden. Anhand der Intensität der reflektierten Objektstrahlung kann so - zusätzlich zur Bestimmung der dreidimensionalen Position und Ausgestaltung - die Zusammensetzung der Farbe des zu vermessenden Objekts ermittelt und damit auf die Objektfarbe geschlossen werden.

Besonders vorteilhaft ist eine Ausführungsform, bei der die Vorrichtung mindestens fünf Laser-Emitter umfasst, wobei wenigstens drei Laser-Emitter als Farblaser ausgebildet sind, und wobei ein erster Farblaser blaues Licht, ein zweiter Farblaser grünes Licht und ein dritter Farblaser rotes Licht aussendet. Eine derart gewählte Anzahl von Farblasern bzw. Laser-Emittern ermöglicht eine eindeutige Erkennung der Objektfarbe. Dabei ist eine sehr hohe Genauigkeit möglich, mit der die Objektfarbe bestimmt werden kann.

Optional umfasst die Vorrichtung eine optische Einheit mit vier Linsen und dem Strahlteiler, wobei die Linsen den Strahlteiler in einer Ebene umgeben, und wobei die zwei Emitter-Arrays und die Linsen derart angeordnet sind, dass die Referenzstrahlung der einzelnen Laser-Emitter die optische Einheit parallel zueinander und die Beleuchtungsstrahlung der einzelnen Laser-Emitter die optische Einheit parallel oder im Wesentlichen parallel zueinander verlassen. Durch die optische Einheit ist es möglich, die Emitter-Arrays an unterschiedlichen Positionen um die optische Einheit herum anzuordnen. Beispielsweise können die vier Linsen in einer quadratischen Anordnung um den Strahlteiler herum angeordnet sein, und die Emitter-Arrays an zwei aneinandergrenzenden Seiten dieses Quadrats positioniert sein. Die beiden Emitter-Arrays sind also bevorzugt in einem Winkel von 90 Grad zueinander angeordnet.

Bevorzugt sind je zwei Linsen der optischen Einheit parallel zueinander angeordnet und der Strahlteiler zwischen diesen zwei Linsen positioniert. Die Linsen weisen bevorzugt alle die gleiche Größe auf und bilden die Außenflächen eines Quadrats. Bevorzugt ist der Strahlteiler in einem 45-Grad-Winkel, d. h. als Diagonale in diesem Quadrat positioniert. Laserstrahlung, die entlang der optischen Achse einer der Linsen durch diese hindurchtritt und vom Strahlteiler reflektiert wird, trifft somit auf eine um 90 Grad zu der Eintrittslinse versetzten Linse ebenfalls entlang der optischen Achse.

Vorteilhafterweise umfasst die Vorrichtung ein Mikrolinsen-Array, das eine Vielzahl von Linsen, bevorzugt Mikrolinsen, umfasst. Die Linsen können bevorzugt in einer Ebene angeordnet sein. Das Mikrolinsen-Array kann die Apertur der Beleuchtungsstrahlung ändern. Bevorzugt ist das Mikrolinsen-Array so ausgebildet, dass die Apertur der Beleuchtungsstrahlung derart geändert werden kann, dass die Beleuchtungsstrahlung in einem Beleuchtungsstreifen auf das Objekt trifft. Beispielsweise weist der Beleuchtungsstreifen eine rechteckige Form auf, wobei die bevorzugt lange Seite des Rechtecks quer zu einer Scanrichtung der Vorrichtung angeordnet ist, während die kurzen Seiten des Rechtecks bevorzugt entlang der Scanrichtung positioniert sind. Im Rahmen der vorliegenden Anmeldung wird unter Scanrichtung eine Bewegungsrichtung verstanden, in die die erfindungsgemäße Vorrichtung bewegt wird, während sie die 3D-Struktur eines Objekts erfasst. Es versteht sich, dass die Ränder des rechteckigen Beleuchtungsstreifens nicht absolut scharf sind, sondern nach den Prinzipien der optischen Wellenausbreitungen mitunter fließende Randbereiche zu akzeptieren sind.

Vorzugsweise sind die Laser-Emitter und die Linsen des Mikrolinsen-Arrays derart angeordnet, dass die Beleuchtungsstrahlung eines Laser-Emitters auf eine Linse des Mikrolinsen-Arrays trifft und durch sie hindurch strahlt. Bevorzugt trifft die Strahlung der vorzugsweise im nahen Infrarotbereich strahlenden Laser-Emitter mittig auf die Linse, jedenfalls entlang der optischen Achse der Linse. Die Strahlung wird durch das Mikrolinsen-Array nicht abgelenkt.

Die Beleuchtungsstrahlung trifft auf das Mikrolinsen-Array bzw. die einzelne Linse und tritt durch das Array hindurch. Dabei wird die Apertur der Beleuchtungsstrahlung entlang der Scanrichtung und auch die Apertur quer hierzu, d. h. quer zur Scanrichtung, verändert. Die Apertur entlang der Scanrichtung ist bevorzugt kleiner als die Apertur quer hierzu. Durch die Verwendung wenigstens eines Farblasers erscheint der Beleuchtungsstreifen farbig. Somit kann der Bediener der Vorrichtung jederzeit erkennen, welcher Bereich des zu erfassenden Objekts aktuell beleuchtet wird.

Besonders bevorzugt ist eine Ausführungsform, bei der die Vorrichtung ein Phasengitter und ein Mikrolinsen-Array umfasst. Das Phasengitter teilt die Beleuchtungsstrahlung der Laser-Emitter, die nicht-sichtbare Laserstrahlung aussenden, jeweils in zwei Strahlen auf, so dass die Beleuchtungsstrahlung bevorzugt in zwei Beleuchtungsstreifen auf das Objekt trifft. Die zwei Beleuchtungsstreifen gewährleisten, dass ein Verkippen der Vorrichtung relativ zu dem zu vermessenden Objekt die Auswertung der Interferenzmuster nicht negativ beeinflusst. Durch die Verwendung wenigstens zweier Beleuchtungsstreifen kann ein solches Verkippen einfacher erkannt und mithilfe der Auswerteeinrichtung rechnerisch korrigiert werden.

Vorteilhafterweise ist das Phasengitter derart ausgebildet, dass die farbige Laserstrahlung das Phasengitter nahezu unbeeinflusst passiert. Im Rahmen der vorliegenden Anmeldung wird unter nahezu unbeeinflusst verstanden, dass der Anteile der Laserstrahlung, der eine Beeinflussung durch das Phasengitter erfährt, derart gering ist, dass er praktisch bedeutungslos ist. In der praktischen Anwendung ruft er keine negativen Auswirkungen auf die Auswertung der Interferenzmuster hervor. Der Anteil ist also entweder vernachlässigbar oder kann durch rechnerische Korrekturmaßnahmen eliminiert werden. Das Phasengitter ist bevorzugt derart ausgebildet und konstruiert, dass es die auftreffende Laserstrahlung in Abhängigkeit ihrer Wellenlängen aufteilt. Laserstrahlung im nahen Infrarot mit einer Wellenlänge von etwa 900 nm bis 920 nm wird mittels des Phasengitters in zwei Strahlen aufgeteilt. Blaue Laserstrahlung mit einer Wellenlänge von ca. 450 nm bis 460 nm und grüne Laserstrahlung mit einer Wellenlänge von ca. 520 nm weisen im Vergleich zur Laserstrahlung im nahen Infrarot eine annähernd halb so große Wellenlänge auf. Daher passieren die blaue und grüne Laserstrahlung das Phasengitter nahezu unbeeinflusst. Insbesondere wird blaue Laserstrahlung mit der halben Wellenläge der Strahlung im nahen Infrarotbereich ungebeugt durch das Phasengitter durchgelassen und erfährt keine messbare Ablenkung. Auch rote Laserstrahlung mit einer Wellenlänge von ca. 600 nm passiert das Phasengitter mit einem großen ungebeugten Anteil. Allerdings wird ein geringer Anteil der roten Laserstrahlung durch das Phasengitter abgelenkt. Dieser Anteil kann bei der späteren Auswertung der Interferenzmuster rechnerisch eliminiert werden. Je geringer die Differenz zwischen der Wellenlänge der farbigen Laserstrahlung und der Wellenlänge der Laserstrahlung im nahen Infrarot ist, desto größer ist der Anteil der Laserstrahlung, der durch das Phasengitter abgelenkt wird. Bevorzugt werden daher max. zwei Farblaser eingesetzt, die blaue bzw. grüne Laserstrahlung aussenden. Die Auswirkungen des Phasengitters auf die farbige Laserstrahlung können dann vernachlässigt werden. Gleichzeitig wird aber die Farbe des zu vermessenden Objekts mit hoher Genauigkeit erkannt.

Optional ist der wenigstens eine Farblaser derart positioniert, dass die farbige Laserstrahlung außerhalb der optischen Achse einer Linse des Mikrolinsen-Arrays auf diese auftrifft, so dass die farbige Laserstrahlung durch die Linse abgelenkt wird. Diverse Laser-Emitter, die nicht-sichtbare Laserstrahlung aussenden, sind bevorzugt derart positioniert, dass die Beleuchtungsstrahlen entlang der optischen Achse der in dem Mikrolinsen-Array enthaltenen Linsen auf diese auftreffen. Das Mikrolinsen-Array verändert dann ausschließlich die Apertur der jeweiligen Laserstrahlung, lenkt diese jedoch nicht ab.

Im Falle der farbigen Laserstrahlung ist jedoch eine Ablenkung gewünscht, da das Phasengitter die farbige Laserstrahlung aufgrund ihrer Wellenlänge nicht beeinflusst. Ein Ablenken der farbigen Laserstrahlung auf einen der beiden Beleuchtungsstreifen erfolgt daher, indem die Laserstrahlung außermittig, d. h. nicht entlang (abweichend von) der optischen Achse der jeweiligen Linse des Mikrolinsen-Arrays auftrifft. Die farbige Laserstrahlung wird mithilfe des Mikrolinsen-Arrays derart abgelenkt, dass einer der Beleuchtungsstreifen farbig ist. Hier überlagert sich die farbige Strahlung mit der nicht-sichtbaren Strahlung (z. B. Infrarotstrahlung). Dabei verändert das Mikrolinsen-Array auch die Apertur der farbigen Laserstrahlung, so dass diese die gesamte rechteckförmige Fläche des Beleuchtungsstreifens ausfüllt.

Optional ist die Vorrichtung derart ausgebildet, dass sie als Dentalscanner verwendbar und in den Mundinnenbereich eines Patienten einführbar ist. Um diesen Anforderungen gerecht zu werden, weist die Vorrichtung bevorzugt entsprechende Dimensionen auf, die ein zumindest teilweises Einführen der Vorrichtung in den Mundinnenbereich ermöglichen. Hierfür weist die Optik der erfindungsgemäßen Vorrichtung bevorzugt einen Durchmesser von höchstens 30 mm, besonders bevorzugt von höchstens 20 mm auf. Die Optik umfasst die Linse, mittels der die Beleuchtungsstrahlung parallelisiert und auf das Objekt gelenkt wird, und sämtliche weiteren optischen Einrichtungen, die zwischen der Linse und dem Objekt angeordnet sind. Die Optik hat bevorzugt eine Länge von höchstens 150 mm, besonders bevorzugt von höchstens 100 mm. Die Länge der Optik ist definiert als der Abstand zwischen der eben erwähnten Linse und dem objektseitigen Ende der Vorrichtung.

Teil der vorliegenden Erfindung ist auch eine Verwendung der erfindungsgemäßen Vorrichtung als Dentalscanner zur Erkennung der Zahnfarbe nach einer Farbskala, insbesondere der Vita-Farbskala. Bei der Vita-Farbskala handelt es sich um eine im zahnmedizinischen Bereich weit verbreitete Einteilung von Zahnfarben, ähnlich der RAL-Farbe im Graphikbereich. Somit ist eine genaue Definition der erfassten Zahnfarbe möglich. Soll beispielsweise basierend auf der dreidimensionalen Struktur des Zahns oder des gesamten Gebisses ein Modell erstellt werden, ist die Zahnfarbe eindeutig festgelegt.

Teil der vorliegenden Erfindung ist auch ein Verfahren zum Erkennen einer 3D-Struktur eines Objekts und seiner Farbe unter Verwendung der erfindungsgemäßen Vorrichtung. Mittels mindestens zweier Laser-Emitter wird Laserstrahlung im nicht-sichtbaren Bereich ausgesendet. Mindestens ein weiterer Laser-Emitter emittiert farbige Laserstrahlung. Die Laserstrahlung der Laser-Emitter wird jeweils in eine Referenzstrahlung und eine Beleuchtungsstrahlung aufgeteilt. Die Beleuchtungsstrahlung trifft auf das zu vermessende Objekt, wird von diesem als Objektstrahlung reflektiert und interferiert mit der Referenzstrahlung. Die durch die Interferenz der Referenzstrahlung und Objektstrahlung entstehenden Interferenzmuster werden mittels des Detektors aufgenommen. Das Objekt wird basierend auf den Interferenzmustern der nicht-sichtbaren Laserstrahlung mithilfe der Auswerteeinrichtung dreidimensional erfasst. Anhand der Intensität der vom Objekt reflektierten farbigen Objektstrahlung wird mithilfe der Auswerteeinrichtung auf die Farbe des Objekts geschlossen. Mithilfe des erfindungsgemäßen Verfahrens ist eine zuverlässige Erkennung der Objektfarbe möglich.

Die Erfindung wird nachfolgend anhand von in den Figuren dargestellten bevorzugten Ausführungsformen erläutert. Die darin dargestellten Besonderheiten können einzeln oder in Kombination verwendet werden, um bevorzugte Ausgestaltungen der Erfindung zu schaffen. Die beschriebenen Ausführungsformen stellen keine Einschränkung der Allgemeinheit des in den Ansprüchen definierten Gegenstands dar. Es zeigen:
- Fig. 1: eine erfindungsgemäße Vorrichtung gemäß einer ersten Ausführungsform in einem Mach-Zehnder-Aufbau, schematisch dargestellt,
- Fig. 2: die erfindungsgemäße Vorrichtung gemäß einer zweiten Ausführungsform mit einer optischen Einheit und zwei Beleuchtungsstreifen, in einer schematischen Darstellung.

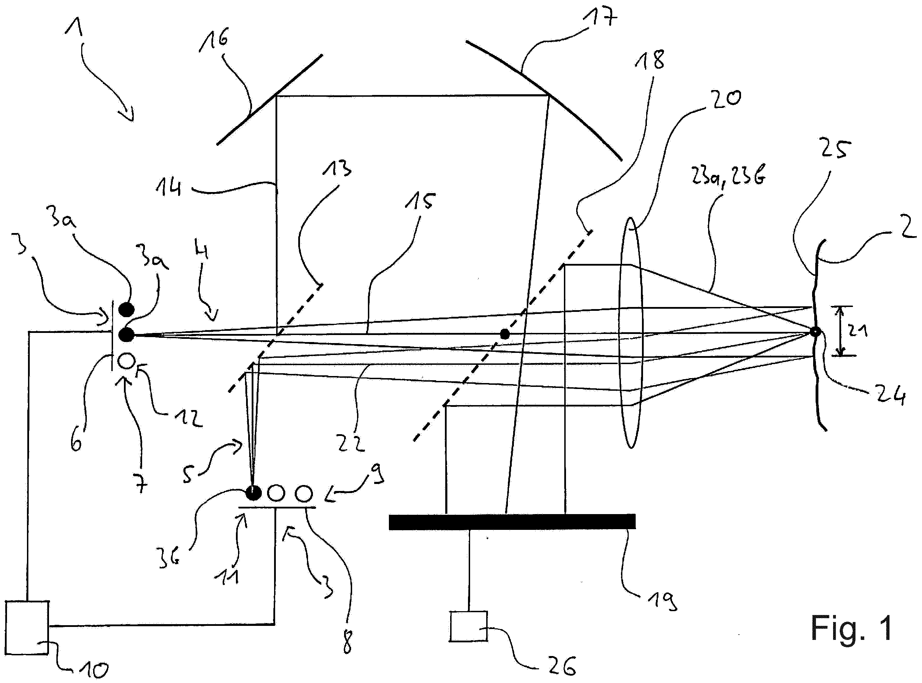

Figur 1 zeigt eine erste Ausführungsform einer Vorrichtung 1 zum Erfassen einer 3D-Struktur eines Objekts 2 in einem Mach-Zehnder-Aufbau. Die Vorrichtung 1 umfasst drei Laser-Emitter 3, von denen zwei als Laser-Emitter 3a ausgebildet sind, die nicht-sichtbare Laserstrahlung 4 im nahen Infrarotbereich mit einer Wellenlänge von ca. 900 nm aussenden. Jeder der beiden Laser-Emitter 3a sendet Laserstrahlung 4 mit einer unterschiedlichen Wellenlänge aus. Bevorzugt unterscheiden sich die Wellenlängen der Laserstrahlung 4 zweier benachbarter Laser-Emitter 3a vorzugsweise nur gering, beispielsweise um 1 nm. Der dritte Laser-Emitter ist als Farblaser 3b ausgebildet, der bevorzugt blaue Laserstrahlung 5 mit einer Wellenlänge von beispielsweise ca. 460 nm aussendet.

Während die Laser-Emitter 3a auf einem ersten Emitter-Chip 6 angeordnet und Teil eines ersten Emitter-Arrays 7 sind, ist der Farblaser 3b bevorzugt auf einem zweiten Emitter-Chip 8 angeordnet und Teil eines zweiten Emitter-Arrays 9.

Die Laser-Emitter 3 beider Emitter-Arrays 7, 9 bzw. beide Emitter-Chips 6, 8 sind mit einer Steuereinrichtung 10 verbunden. Mithilfe der Steuereinrichtung 10 können die Laser-Emitter 3 einzeln angesteuert, beispielsweise einzeln an- und ausgeschaltet werden.

Der Farblaser 3b ist vorzugsweise in einer Position 11 auf dem zweiten Emitter-Chip 8 positioniert, die konjugiert zu einer Position 12 auf dem ersten Emitter-Chip 6 ist. An der Position 12 ist bevorzugt kein Laser-Emitter 3 angeordnet. Sollte doch ein Laser-Emitter 3 an der Position 12 angeordnet sein, so ist er nicht eingeschaltet und emittiert keine Laserstrahlung.

Im Rahmen der vorliegenden Anmeldung sind zwei voneinander unterschiedliche Positionen (hier Positionen 11 und 12) als konjugiert definiert, wenn Laserstrahlung, die von diesen Positionen ausgesandt wird, sich im weiteren Strahlverlauf überlagert bzw. deckungsgleich ist. Im vorliegenden Fall wäre die Laserstrahlung 5 des Farblasers 3b (in Position 11) nach Reflexion an einer als Strahlteiler 13 ausgebildeten optischen Einrichtung und die Laserstrahlung eines nicht gezeigten Laser-Emitters an der Position 12, nachdem diese durch den Strahlteiler 13 transmittiert ist, deckungsgleich.

Im Folgenden soll der Strahlenverlauf der Laserstrahlung 4 eines der Laser-Emitter 3a und der Strahlenverlauf der Laserstrahlung 5 des Farblasers 3b als ein Beispiel für die verwendete Laserstrahlung näher erläutert werden:
Die Laserstrahlung 4 wird von einem der Laser-Emitter 3a emittiert und trifft auf den Strahlteiler 13. Dieser teilt die Laserstrahlung 4 in eine Referenzstrahlung 14 und eine Beleuchtungsstrahlung 15 auf. Die Referenzstrahlung 14 ist dabei der am Strahlteiler 13 reflektierte Anteil der Laserstrahlung 4. Sie wird im weiteren Verlauf mittels zweier Spiegel, vorzugsweise eines Spiegels 16 und eines Parabolspiegels 17, auf einen zweiten Strahlteiler 18 gelenkt. Die Referenzstrahlung durchdringt den zweiten Strahlteiler 18 und trifft auf einen Detektor 19.

Die Beleuchtungsstrahlung 15 ist der Anteil der Laserstrahlung 4, der durch den Strahlteiler 13 transmittiert. Im weiteren Verlauf durchdringt die Beleuchtungsstrahlung 15 ebenfalls den zweiten Strahlteiler 18 und trifft beispielsweise auf eine Linse 20, die die Beleuchtungsstrahlen parallelisiert und auf das Objekt 2 lenkt. Dabei lenkt die Linse 20 die Beleuchtungsstrahlung 15 derart ab, dass sie bevorzugt in einem rechteckigen Beleuchtungsstreifen 21 auf das Objekt 2 trifft. Rechteckig bedeutet in diesem Zusammenhang nicht, dass die beleuchteten Ränder absolut scharf sind. Vielmehr müssen nach den Prinzipien der optischen Wellenausbreitungen mitunter fließende Randbereiche akzeptiert werden.

Auch die Laserstrahlung 5 des Farblasers 3b wird bevorzugt durch den Strahlteiler 13 in Referenzstrahlung (nicht dargestellt) und Beleuchtungsstrahlung 22 aufgeteilt. Die Referenzstrahlung des Farblasers 3b verläuft analog zu der Referenzstrahlung 14 des Laser-Emitters 3a bis zu dem Detektor 19. Die Beleuchtungsstrahlung 22 des Farblasers 3b entsteht durch Reflexion der Laserstrahlung 5 am Strahlteiler 13. Im weiteren Verlauf transmittiert sie durch den zweiten Strahlteiler 18 und trifft auf die Linse 20. Diese parallelisiert die Laserstrahlung 22 und lenkt sie derart ab, dass sie bevorzugt als Beleuchtungsstrahl 21 auf das Objekt 2 trifft.

Die Beleuchtungsstrahlung 15 des Laser-Emitters 3a wird als Objektstrahlung 23a am Objekt 2 reflektiert; die Beleuchtungsstrahlung 22 des Farblasers 3b wird am Objekt 2 als Objektstrahlung 23b reflektiert. Der Verlauf der Objektstrahlung 23a, 23b soll beispielhaft für einen Objektpunkt 24 auf einer Oberfläche 25 des Objekts 2 erläutert werden. Die Objektstrahlungen 23a, 23b, ausgehend von dem Objektpunkt 24, sind somit deckungsgleich. Es versteht sich, dass die Oberfläche 25 eine endliche Anzahl von Objektpunkten aufweist, die alle in der Lage sind, die Beleuchtungsstrahlung 15, 22 der Laser-Emitter 3 als Objektstrahlung 23a, 23b zu reflektieren.

Zum Verständnis der Strahlengänge kann der Objektpunkt 24 vereinfacht als Punktlichtquelle angesehen werden. Diese sendet Objektstrahlung 23a, 23b aus, die auf die Linse 20 trifft, von dieser bevorzugt parallelisiert wird und auf den zweiten Strahlteiler 18 fällt. An diesem wird die Objektstrahlung 23a, 23b reflektiert und gelangt zu dem Detektor 19.

Die Referenzstrahlung 14 und die Objektstrahlung 23a eines der Laser-Emitter 3a, d. h. Laserstrahlung mit derselben Wellenlänge, interferieren auf dem Detektor 19. Durch diese Interferenz entsteht ein Interferenzmuster einer bestimmten räumlichen Frequenz, das aufgenommen wird.

Ein solches Interferenzmuster wird für sämtliche Laser-Emitter 3a durch den Detektor 19 aufgenommen. Anhand dieser Interferenzmuster können Tiefeninformationen der Oberfläche 25 des Objekts 2 gewonnen und damit die Struktur der Oberfläche 25 ermittelt werden. Der Detektor 19 ist hierzu mit einer Auswerteeinrichtung 26 verbunden, die die Auswertung der Interferenzmuster vornimmt.

Die Auswerteeinrichtung 26 ist so ausgebildet, um das Objekt 2 basierend auf den Interferenzmustern der nicht-sichtbaren Laserstrahlung 4 dreidimensional zu erfassen. Zur detaillierten Erläuterung des Strahlverlaufs der Laserstrahlung 4 und zur detaillierten Erläuterung der Auswertung der Interferenzmuster wird vollumfänglich auf die EP 2796938 A1 Bezug genommen.

Auch die Objektstrahlung 23b des Farblasers 3b und die zugehörige Referenzstrahlung (nicht dargestellt) interferieren ebenfalls auf dem Detektor 19. Die Auswertung der dadurch entstehenden Interferenzmuster erfolgt mithilfe der Auswerteeinrichtung 26. Ziel dieser Auswertung ist es, die laterale Position des Objektpunkts 24 zu bestimmen, an dem die Objektstrahlung 23b des Farblasers 3b in Richtung des Detektors 19 reflektiert wurde. Unter lateraler Position des Objektpunkts 24 wird im Rahmen der vorliegenden Anmeldung die Position des Objektpunkts 24 in vertikaler Richtung in der Bildebene in Figur 1 und quer zur Bildebene verstanden. Die Tiefeninformation, d.h. die Lage des Objektpunkts 24 in horizontaler Richtung in der Bildebene in Figur 1, kann durch Auswertung der Interferenzmuster der farbigen Laserstrahlung 5 nicht gewonnen werden. Um Doppeldeutigkeiten bei der Auswertung der Interferenzmuster zu vermeiden, sind die Farblaser 3b nicht konjugiert zu den Laser-Emitter 3a, die Laserstrahlung 4 aus dem nahen Infrarotbereich aussenden, angeordnet.

Darüber hinaus ist die Auswerteeinrichtung 26 ausgebildet, um die Intensität der vom Objekt 2 reflektierten farbigen Objektstrahlung 23b zu ermitteln. Anhand der Intensität kann mittels der Auswerteeinrichtung 26 bevorzugt auf die Farbe des Objekts 2 geschlossen werden. Dies soll im Folgenden erläutert werden:
Wird die Vorrichtung 1 wie im vorliegenden Falle als Dentalscanner eingesetzt, muss zwischen Zähnen mit weißer bzw. annähernd weißer Färbung und Zahnfleisch mit roter Färbung unterschieden werden.

Anhand der Intensität der vom Objekt 2 reflektierten blauen Objektstrahlung 23b des Farblasers 3b kann der Anteil an blauer Farbe in der Farbe des Objekts 2 ermittelt werden. Da die Farbe Weiß einen gewissen Blauanteil aufweist, kann mithilfe der blauen Laserstrahlung 5 des Farblasers 3b die Farbe der Zähne detektiert werden.

Um die rote Färbung des Zahnfleischs zu erkennen wird zusätzlich die Intensität der Objektstrahlung 23a einer der Laser-Emitter 3a ausgewertet. Da die Laser-Emitter 3a Laserstrahlung 4 im nahen Infrarot, d. h. mit einer Wellenlänge von ca. 900 nm, aussenden, hat die Laserstrahlung 4 einen Rotanteil. Anhand der Intensität der vom Objekt 2 reflektierten Objektstrahlung 23a der Laser-Emitter 3a kann also der Anteil an roter Farbe in der Farbe des Objekts 2 ermittelt werden.

Die Information, welchem Objektpunkt 24 des zu erfassenden Objekts 2 welche Farbinformation (Weiß oder Rot) zuzuordnen ist, wird anhand der Interferenzmuster, die durch die Laserstrahlung 5 des Farblasers 3d und durch die Laserstrahlung 4 der Laser-Emitter 3a entstehen, mithilfe der Auswerteeinrichtung 26 gewonnen. Eine genauere Bestimmung der einzelnen Farbkomponenten eines Objektes kann mittels Referenzmessungen erfolgen. Wenn die zu detektierenden Farben bekannt oder vorbestimmbar sind, lassen sich Referenzmessungen für diese Farben durchführen. Die eigentlichen Messungen führen dann zu besseren Messergebnissen, da mittels der Referenzmessungen auf bestimmte Farbkomponenten rückgeschlossen werden kann. In einer bevorzugten Ausführungsform umfasst die Vorrichtung deshalb einen Datenspeicher oder eine Speichereinheit, in der bevorzugt die Referenzdaten der Referenzmessungen gespeichert sind. Referenzmessungen können beispielsweise mit unterschiedlichen Farbtönen einer Farbskala, insbesondere mit der Vita-Farbskala durchgeführt werden. Mittels der Auswerteeinrichtung 26 kann dann die Farbe eines Objekts, beispielsweise eines Zahns, dem genau Farbton der Vita-Farbskala zugeordnet werden.

Es versteht sich, dass die vorliegende Erfindung nicht auf die Anzahl eines Farblasers 3b festgelegt ist. Vielmehr können bis zu drei Farblasers 3b verwendet werden, die Laserstrahlung mit den drei Grundfarben (Blau, Grün und Rot) aussenden. Jede beliebige Farbe ist aus diesen drei Grundfarben zusammengesetzt, weshalb mithilfe der drei Farblaser 3b jede Objektfarbe eindeutig ermittelt werden kann. Es versteht sich, dass auch mehr als drei Farblaser 3b vorgesehen sein können, wobei dann dieselbe Grundfarbe von mehreren Lasern ausgesendet wird. Es ist ebenfalls denkbar, andere Grundfarben als die obigen (Rot, Grün, Blau) zu verwenden, beispielsweise Cyan, Magenta und Gelb (CMY-Standard).

Auch die Anzahl der Laser-Emitter 3a, die Laserstrahlung 4 im nahen Infrarotbereich aussenden, ist nicht auf zwei Laser-Emitter 3a limitiert. Es können bevorzugt deutlich mehr als zwei Laser-Emitter 3a in der Vorrichtung 1 verwendet werden. Jedenfalls sind aber mindestens zwei Laser-Emitter 3a notwendig, um das Objekt 2 dreidimensional zu erfassen.

Insgesamt können beispielsweise vier Laser-Emitter 3 verwendet werden, wobei wenigstens zwei Laser-Emitter als Farblaser 3b ausgebildet sind und wobei bevorzugt der eine Farblaser blaues und der andere Farblaser grünes Licht aussendet. Alternativ ist es ebenso möglich, dass die Vorrichtung mindestens fünf Laser-Emitter 3 umfasst, wobei wenigstens drei Laser-Emitter als Farblaser 3b ausgebildet sind und, wobei ein erster Farblaser blaues Licht, ein zweiter Farblaser grünes Licht und ein dritter Farblaser rotes Licht aussendet. Jedenfalls sind auch in dieser bevorzugten Ausführungsform mindestens zwei Laser-Emitter 3a notwendig, um das Objekt 2 dreidimensional zu erfassen.

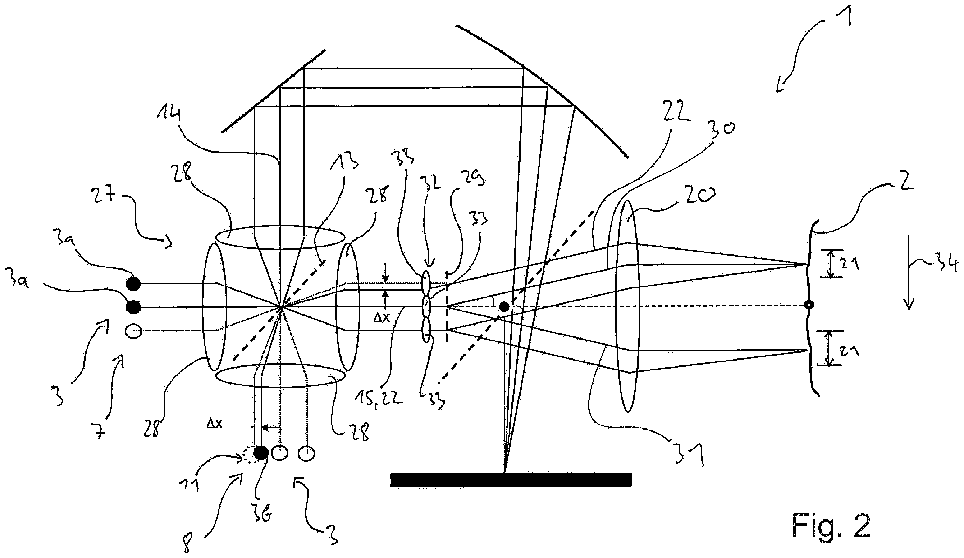

In Figur 2 ist eine bevorzugte zweite Ausführungsform der Vorrichtung 1 dargestellt. Die Vorrichtung 1 unterscheidet sich von der ersten Ausführungsform gemäß Figur 1 durch eine optische Einheit 27. Diese weist vier Linsen 28 und den Strahlteiler 13 auf, wobei die Linsen 28 den Strahlteiler 13 bevorzugt in einer Ebene umgeben. Jeweils zwei einander gegenüberliegende Linsen 28 sind parallel zueinander angeordnet, wobei der Strahlteiler 13 zwischen diesen zwei Linsen 28 positioniert ist. Insgesamt bilden die Linsen 28 bevorzugt Seitenflächen eines Quadrats oder eines Rechtecks oder eines Vierecks, dessen Diagonale durch den Strahlteiler 13 gebildet wird.

Die beiden Emitter-Arrays 7, 8, d. h. die Laser-Emitter 3a und auch der Farblaser 3b sind an Seitenflächen der optischen Einheit 27 derart angeordnet, dass die Referenzstrahlung 14 der einzelnen Laser-Emitter 3 die optische Einheit 27 parallel zueinander verlassen. Die Beleuchtungsstrahlung 15, 22 der einzelnen Laser-Emitter 3 verlassen die optische Einheit 27 ebenfalls parallel zueinander.

Die Vorrichtung 1 gemäß Figur 2 unterscheidet sich weiter bevorzugt durch ein Phasengitter 29, das die Beleuchtungsstrahlung 15 der Laser-Emitter 3a jeweils in zwei Strahlen aufteilt. Die Aufteilung in einen ersten Strahl 30 und einen zweiten Strahl 31 bewirkt, dass die Beleuchtungsstrahlung 15 in zwei Beleuchtungsstreifen 21 auf das Objekt 2 trifft. Das Phasengitter 29 ist derart ausgebildet, dass die farbige Beleuchtungsstrahlung 22 das Phasengitter 29 unbeeinflusst passiert. Die Wirkung des Phasengitters 29 auf die Beleuchtungsstrahlung 15, 22 erfolgt in Abhängigkeit der Wellenlänge der Beleuchtungsstrahlung 15, 22. Das Phasengitter 29 teilt Strahlung einer bestimmten Wellenlänge auf und lässt Strahlung einer anderen Wellenlänge ungehindert passieren. Die Laserstrahlung 4 mit einer Wellenlänge von ca. 900 nm wird in die Strahlen 30, 31 aufgeteilt, während die Beeinflussung der farbigen Laserstrahlung durch das Phasengitter gering ist. Bei Laserstrahlung mit einer Wellenlänge von 460 nm (Blau) ist die Beeinflussung nicht detektierbar. Bei Strahlung mit einer Wellenlänge von 520 nm (Grün) ist die Beeinflussung vernachlässigbar und hat keine praktischen Auswirkungen auf die Messung. Rote Laserstrahlung mit einer Wellenlänge von 600 nm wird derart gering beeinflusst, so dass die Beeinflussung einfach rechnerisch kompensiert werden kann und daher auch hier ohne praktische Bedeutung ist.

Nach Durchlaufen des Phasengitters 29 treffen die Strahlen 30, 31 auf die Linse 20, die analog zu der Ausführungsform in Figur 1 die Beleuchtungsstrahlung 15 parallelisiert. Im Gegensatz zu Figur 1 sind - aus Gründen der Übersichtlichkeit - nur die Zentralstrahlen der Erleuchtungsstrahlung 15 dargestellt, so dass die Beleuchtungsstreifen 21 als Beleuchtungspunkte erscheinen. Der Verlauf der Objektstrahlung 23a, 23b erfolgt analog zu dem anhand von Figur 1 Beschriebenen.

In Strahlverlaufsrichtung vor dem Phasengitter 29 ist ein Mikrolinsen-Array 32 angeordnet, das mehrere Mikro-Linsen 33 umfasst. Das Mikrolinsen-Array 32 ist ausgebildet, um die Apertur der Beleuchtungsstrahlung 15, 22 derart zu ändern, dass die Beleuchtungsstrahlung 15, 22 in einem rechteckigen Beleuchtungsstreifen auf das Objekt 2 trifft. Dabei ist die Beleuchtungs-Apertur entlang einer Scanrichtung 34, entlang der die Vorrichtung 1 zum Erfassen des Objekts 2 bewegt wird, kleiner als die Apertur quer zur Scanrichtung 34. Dadurch ergeben sich Beleuchtungsstreifen 21, die entlang der Scanrichtung 34 kürzer sind als quer zur Scanrichtung 34.

Darüber hinaus ist das Mikrolinsen-Array 32 ausgebildet, um die farbige Laserstrahlung 5, insbesondere die Beleuchtungsstrahlung 22 des Farblasers 3b, derart abzulenken, dass bevorzugt einer der Beleuchtungsstreifen 21 farbig ist. Dies ist in Figur 2 der obere Beleuchtungsstreifen 21.

Der Farblaser 3b ist hierzu im Gegensatz zu Figur 1 um die Strecke Δx von der konjugierten Position 11 verschoben angeordnet. Dadurch trifft die Laserstrahlung 5 nach Reflexion am ersten Strahlteiler 13 um die Strecke Δx versetzt außermittig auf eine der Linsen 33 des Mikrolinsen-Arrays 32 auf. Die Beleuchtungsstrahlung 22 erfährt hierdurch eine Ablenkung bevorzugt zu der optischen Achse des Mikrolinsen-Arrays 32 hin. Dabei verläuft die durch das Mikrolinsen-Array 32 abgelenkte Beleuchtungsstrahlung 22 parallel zu den beiden Strahlen 30, 31 der Laser-Emitter 3a, die von dem Phasengitter 29 aufgeteilt wurden.

In Figur 2 ist die konjugierte Position 11 und der sich dadurch ergebende Strahlengang der Laserstrahlung 5 gestrichelt dargestellt. Die um Δx ausgelenkte (verschobene) Position des Farblasers 3b und der reale Strahlverlauf der Laserstrahlung 5 ist als durchgezogene Linie in Figur 2 gezeichnet.

Der Farblaser 3b ist also derart positioniert, dass die farbige Laserstrahlung 5, insbesondere die Beleuchtungsstrahlung 22, außerhalb der optischen Achse einer Linse des Mikrolinsen-Arrays 32 auf diese auftrifft, so dass die farbige Laserstrahlung 5 durch die Linse abgelenkt wird. Allerdings erfolgt im weiteren Verlauf keine Ablenkung der farbigen Laserstrahlung 5 durch das Phasengitter 29. Die Verschiebung der Position des Farblasers 3b in dem zweiten Emitter-Array 9 ist bevorzugt derart groß, dass die Beleuchtungsstrahlung 22 parallel beispielsweise zu der ersten Beleuchtungsstrahlung 30 zwischen dem Phasengitter 29 und der Linse 20 ist. Hierdurch wird sichergestellt, dass die in der Linse 20 abgelenkte Beleuchtungsstrahlung 22 sich in dem Beleuchtungsstreifen 21 bzw. wie hier dargestellt in dem Beleuchtungspunkt 21 mit der Strahlung aus den Laser-Emittern 3a trifft.

Bevorzugt ist der Abstand zwischen dem Mikrolinsen-Array 32 und dem Phasengitter 29 so gewählt, dass die außermittig versetzt auf die Linse 33 des Mikrolinsen-Arrays 32 auftreffende farbige Beleuchtungsstrahlung 22 so zu der optischen Achse der Linse hin abgelenkt wird, dass die abgelenkte Strahlung die optische Achse der Linse 33 in der Ebene des Phasengitters 29 schneidet.

## Patentansprüche

1. Vorrichtung zum Erfassen einer 3D-Struktur eines Objekts (2) umfassend:
- mindestens drei Laser-Emitter (3), die jeweils Laserstrahlung (4, 5) mit einer Wellenlänge erzeugen, wobei sich die Wellenlängen der ausgesendeten Laserstrahlung (4, 5) voneinander unterscheiden,
- optische Einrichtungen (13, 18, 20, 27, 29, 32), von denen wenigstens eine ein Strahlteiler (13) ist, der die Laserstrahlung (4, 5) der Laser-Emitter (3) jeweils in eine Referenzstrahlung (14) und eine Beleuchtungsstrahlung (15, 22) aufteilt, wobei die Beleuchtungsstrahlung (15, 22) auf das zu vermessende Objekt (2) trifft, von dem Objekt (2) als Objektstrahlung (23,a, 23b) reflektiert wird und mit der Referenzstrahlung (14) interferiert,
- einen Detektor (19), der die durch die Interferenz der Referenzstrahlung (14) und Objektstrahlung (23a, 23b) entstehenden Interferenzmuster aufnimmt, und
- eine Auswerteeinrichtung (26) zur Auswertung der aufgenommenen Interferenzmuster, die mit dem Detektor (19) verbunden ist,
- wobei wenigstens zwei der Laser-Emitter (3) Laserstrahlung (4) im nicht-sichtbaren Bereich aussenden und,
- wobei die Auswerteeinrichtung (26) ausgebildet ist, das Objekt (2) basierend auf den Interferenzmustern der nicht-sichtbaren Laserstrahlung (4) dreidimensional zu erfassen,
**dadurch gekennzeichnet,**
- **dass** wenigstens einer der Laser-Emitter (3) ein Farblaser (3b) ist, der farbige Laserstrahlung (5) aussendet; und
- **dass** die Auswerteeinrichtung (26) weiter ausgebildet ist, um anhand der Intensität der vom Objekt (2) reflektierten farbigen Objektstrahlung (23b) auf die Farbe des Objekts (2) zu schließen;
- die Laser-Emitter (3) in zwei Emitter-Arrays (7, 9) angeordnet sind;
- die Laser-Emitter (3a), die nicht-sichtbare Laserstrahlung (4) aussenden, Teil eines ersten Emitter-Arrays (7) und der wenigstens eine Farblaser (3b) Teil eines zweiten Emitter-Arrays (9) sind; und
- der wenigstens eine Farblaser (3b) an einer Position (11) in dem zweiten Emitter-Array (9) angeordnet ist, die zu einer unbesetzten Position (12) für einen Laser-Emitter (3) oder zu einem nicht emittierendem Laser-Emitter (3) in dem ersten Emitter-Array (7) konjungiert ist.

2. Vorrichtung nach Anspruch 1, **dadurch gekennzeichnet, dass** der wenigstens eine Farblaser (3b) Laserstrahlung (5) mit einer der Grundfarben aussendet.

3. Vorrichtung nach einem der vorhergehenden Ansprüche, **dadurch gekennzeichnet, dass** der wenigstens eine Farblaser (3b) blaues Licht oder grünes Licht aussendet.

4. Vorrichtung nach Anspruch 1, **dadurch gekennzeichnet, dass** die Vorrichtung mindestens vier Laser-Emitter (3) umfasst, wobei wenigstens zwei Laser-Emitter (3) als Farblaser (3b) ausgebildet sind, und wobei der eine Farblaser blaues und der andere Farblaser grünes Licht aussendet.

5. Vorrichtung nach Anspruch 1, **dadurch gekennzeichnet, dass** die Vorrichtung mindestens fünf Laser-Emitter (3) umfasst, wobei wenigstens drei Laser- Emitter (3) als Farblaser (3b) ausgebildet sind und, wobei ein erster Farblaser blaues Licht, ein zweiter Farblaser grünes Licht und ein dritter Farblaser rotes Licht aussendet.

6. Vorrichtung nach einem der vorhergehenden Ansprüche, **dadurch gekennzeichnet, dass** die Vorrichtung (1) eine optische Einheit (27) mit vier Linsen (28) und dem Strahlteiler (13) umfasst, wobei die Linsen (28) den Strahlteiler (13) in einer Ebene umgeben, und wobei die zwei Emitter Arrays (7, 9) und die Linsen (28) derart angeordnet sind, dass die Referenzstrahlung (14) der einzelnen Laser-Emitter (3) die optische Einheit (27) parallel zueinander verlassen und dass die Beleuchtungsstrahlung (15, 22) der einzelnen Laser-Emitter (3) die optische Einheit (27) parallel zueinander verlassen.

7. Vorrichtung nach einem der vorhergehenden Ansprüche, **dadurch gekennzeichnet, dass** die Vorrichtung (1) ein Mikrolinsen-Array (32) umfasst, das ausgebildet ist, die Apertur der Beleuchtungsstrahlung (15, 22) derart zu ändern, dass die Beleuchtungsstrahlung (15, 22) in einem Beleuchtungsstreifen (21) auf das Objekt trifft.

8. Vorrichtung nach einem der vorhergehenden Ansprüche, **dadurch gekennzeichnet, dass** die Vorrichtung (1) weiter umfasst:
- ein Phasengitter (29), dass die Beleuchtungsstrahlung (15) der Laser-Emitter (3a), die nicht-sichtbare Laserstrahlung (4) aussenden, jeweils in zwei Strahlen (30, 31) aufteilt, so dass die Beleuchtungsstrahlung (15) in zwei Beleuchtungsstreifen (21) auf das Objekt (2) trifft und
- ein Mikrolinsen-Array (32), das die farbige Laserstrahlung (5) des wenigstens einen Farblasers (3b) durch das Mikrolinsen-Array (32) derart ablenkt, dass einer der Beleuchtungsstreifen (21) farbig ist.

9. Vorrichtung nach Anspruch 8, **dadurch gekennzeichnet, dass** das Phasengitter (29) derart ausgebildet ist, dass die farbige Laserstrahlung (5) das Phasengitter (29) nahezu unbeeinflusst passiert.

10. Vorrichtung nach Anspruch 7, **dadurch gekennzeichnet, dass** der wenigstens eine Farblaser (3b) derart positioniert ist, dass die farbige Laserstrahlung (5) außerhalb der optischen Achse einer Linse (33) des Mikrolinsen-Arrays (32) auf diese auftrifft, so dass die farbige Laserstrahlung (5) durch die Linse (33) abgelenkt wird.

11. Vorrichtung nach einem der vorhergehenden Ansprüche, **dadurch gekennzeichnet, dass** die Vorrichtung (1) ein Dentalscanner ist, der derart dimensioniert ist, dass er zumindest teilweise in den Mundinnenbereich eines Patienten einführbar ist.

12. Verwendung der Vorrichtung nach einem der vorhergehenden Ansprüche als Dentalscanner zur Erkennung der Zahnfarbe nach einer Farbskala, insbesondere der Vita-Farbskala.

13. Verfahren zum Erkennen einer 3D-Struktur eines Objekts (2) und seiner Farbe unter Verwendung einer Vorrichtung (1) umfassend,
- mindestens drei Laser-Emitter (3),
- optische Einrichtungen (13, 18, 20, 27, 29, 32), von denen wenigstens eine ein Strahlteiler (13) ist,
- einen Detektor (19) und
- eine Auswerteeinrichtung (26),
wobei mittels mindestens zweier Laser-Emitter (3a) Laserstrahlung (4) im nicht-sichtbaren Bereich und mittels mindestens einem weiteren Laser-Emitter (3b) farbige Laserstrahlung (5) ausgesendet wird,
wobei die Laserstrahlung (4, 5) der Laser-Emitter (3) jeweils in eine Referenzstrahlung (14) und eine Beleuchtungsstrahlung (15, 22) aufgeteilt wird,
wobei die Beleuchtungsstrahlung (15, 22) auf das zu vermessende Objekt (2) trifft, von dem Objekt (2) als Objektstrahlung (23a, 23b) reflektiert wird und mit der Referenzstrahlung (14) interferiert,
wobei die durch die Interferenz der Referenzstrahlung (14) und Objektstrahlung (15, 22) entstehenden Interferenzmuster mittels des Detektors (19) aufgenommen werden,
wobei das Objekt (2) basierend auf den Interferenzmustern der nicht-sichtbaren Laserstrahlung (4) mithilfe der Auswerteeinrichtung (26); dreidimensional erfasst wird und,
wobei anhand der Intensität der vom Objekt (2) reflektierten farbigen Objektstrahlung (23b) mithilfe der Auswerteeinrichtung (26) auf die Farbe des Objekts (2) geschlossen wird;
wobei
- die Laser-Emitter (3) in zwei Emitter-Arrays (7, 9) angeordnet sind;
- die Laser-Emitter (3a), die nicht-sichtbare Laserstrahlung (4) aussenden, Teil eines ersten Emitter-Arrays (7) und der wenigstens eine Farblaser (3b) Teil eines zweiten Emitter-Arrays (9) sind; und
- der wenigstens eine Farblaser (3b) an einer Position (11) in dem zweiten Emitter-Array (9) angeordnet ist, die zu einer unbesetzten Position (12) für einen Laser-Emitter (3) oder zu einem nicht emittierendem Laser-Emitter (3) in dem ersten Emitter-Array (7) konjungiert ist.

## Claims

1. Apparatus for detecting a 3D structure of an object (2), comprising:
- at least three laser emitters (3), each of which generates laser radiation (4, 5) at a wavelength, wherein the wavelengths of the emitted laser radiation (4, 5) differ from one another,
- optical devices (13, 18, 20, 27, 29, 32), at least one of which is a beam splitter (13) that splits the laser radiation (4, 5) of the laser emitters (3) into a reference radiation (14) and an illumination radiation (15, 22), wherein the illumination radiation (15, 22) strikes the object (2) to be measured, is reflected from the object (2) as object radiation (23a, 23b) and interferes with the reference radiation (14),
- a detector (19), which records the interference patterns formed due to the interference of the reference radiation (14) and the object radiation (23a, 23b), and
- an analysis unit (26) for analyzing the recorded interference patterns which is connected to the detector (19),
- wherein at least two of the laser emitters (3) emit laser radiation (4) in the invisible range, and
- wherein the analysis unit (26) is configured to detect the object (2) in three dimensions based on the interference patterns of the invisible laser radiation (4),
**characterized in that**
- at least one of the laser emitters (3) is a color laser (3b) that emits colored laser radiation (5); and
- the analysis unit (26) is further configured to deduce the color of the object (2) on the basis of the intensity of the colored object radiation (23b) reflected from the object (2);
- the laser emitters (3) are arranged in two emitter arrays (7, 9);
- the laser emitters (3a) that emit invisible laser radiation (4) are part of a first emitter array (7) and the at least one color laser (3b) is part of a second emitter array (9); and
- the at least one color laser (3b) is arranged in a position (11) in the second emitter array (9), which is conjugated with an unoccupied position (12) for a laser emitter (3) or with a non-emitting laser emitter (3) in the first emitter array (7).

2. Apparatus according to claim 1, **characterized in that** the at least one color laser (3b) emits laser radiation (5) with one of the primary colors.

3. Apparatus according to any one of the preceding claims, **characterized in that** the at least one color laser (3b) emits blue light or green light.

4. Apparatus according to claim 1, **characterized in that** the apparatus comprises at least four laser emitters (3), wherein at least two laser emitters (3) are configured as color lasers (3b), and wherein one of the color lasers emits blue light and the other color laser emits green light.

5. Apparatus according to claim 1, **characterized in that** the apparatus comprises at least five laser emitters (3), wherein at least three laser emitters (3) are configured as color lasers (3b), and wherein a first one of the color lasers emits blue light, a second one of the color lasers emits green light and a third one of the color lasers emits red light.

6. Apparatus according to any one of the preceding claims, **characterized in that** the apparatus (1) comprises an optical unit (27) having four lenses (28) and the beam splitter (13), wherein the lenses (28) surround the beam splitter (13) in one plane, and wherein the two emitter arrays (7, 9) and the lenses (28) are arranged such that the reference radiation (14) of the individual laser emitters (3) leave the optical unit (27) in parallel with one another, and the illumination radiation (15, 22) of the individual laser emitters (3) leave the optical unit (27) in parallel with one another.

7. Apparatus according to any one of the preceding claims, **characterized in that** the apparatus (1) comprises a microlens array (32) configured to alter the aperture of the illumination radiation (15, 22) such that the illumination radiation (15, 22) strikes the object in an illumination strip (21).

8. Apparatus according to any one of the preceding claims, **characterized in that** the apparatus (1) additionally comprises:
- a phase grating (29), which splits the illumination radiation (15) of the laser emitters (3a) that emit invisible laser radiation (4) into two beams (30, 31) each so that the illumination radiation (15) strikes the object (2) in two illumination strips (21) and
- a microlens array (32), which deflects the colored laser radiation (5) of the at least one color laser (3b) through the microlens array (32) such that one of the illumination strips (21) is colored.

9. Apparatus according to claim 8, **characterized in that** the phase grating (29) is configured such that the colored laser radiation (5) passes through the phase grating (29) without substantially being influenced.

10. Apparatus according to claim 7, **characterized in that** the at least one color laser (3b) is positioned such that the colored laser radiation (5) strikes a lens (33) of the microlens array (32) outside of the optical axis thereof so that the colored laser radiation (5) is deflected by the lens (33).

11. Apparatus according to any one of the preceding claims, **characterized in that** the apparatus (1) is a dental scanner that is dimensioned such that it can at least partly be introduced into a patient's oral cavity.

12. Use of the apparatus according to any one of the preceding claims as a dental scanner for detecting the tooth color according to a color scale, in particular the Vita Color Scale.

13. Method for detecting a 3D structure of an object (2) and its color using an apparatus (1) comprising:
- at least three laser emitters (3),
- optical devices (13, 18, 20, 27, 29, 32), at least one of which is a beam splitter (13),
- a detector (19) and
- an analysis unit (26),
wherein by means of at least two laser emitters (3a) laser radiation (4) in the invisible range is emitted and colored laser radiation (5) is emitted by means of at least one additional laser emitter (3b),
wherein the laser radiation (4, 5) of the laser emitters (3) is split into a reference radiation (14) and an illumination radiation (15, 22) each,
wherein the illumination radiation (15, 22) strikes the object (2) to be measured, is reflected from the object (2) as object radiation (23a, 23b) and interferes with the reference radiation (14),
wherein the interference patterns formed due to the interference of the reference radiation (14) and the object radiation (15, 22) are recorded by means of the detector (19),
wherein the object (2) is detected in three dimensions based on the interference patterns of the invisible laser radiation (4) by means of the analysis unit (26), and wherein the color of the object (2) is deduced on the basis of the intensity of the colored object radiation (23b) reflected from the object (2) by means of the analysis unit (26);
wherein
- the laser emitters (3) are arranged in two emitter arrays (7, 9);
- the laser emitters (3a) that emit invisible laser radiation (4) are part of a first emitter array (7) and the at least one color laser (3b) is part of a second emitter array (9); and
- the at least one color laser (3b) is arranged in a position (11) in the second emitter array (9), which is conjugated with an unoccupied position (12) for a laser emitter (3) or with a non-emitting laser emitter (3) in the first emitter array (7).

## Revendications

1. Dispositif d'enregistrement de la structure 3D d'un objet (2) comprenant :
- au moins trois émetteurs laser (3) générant chacun un rayonnement laser (4, 5) avec une longueur d'onde, les longueurs d'onde des rayonnements laser (4, 5) émis étant différentes les unes des autres,
- des dispositifs optiques (13, 18, 20, 27, 29, 32), dont au moins l'un est un séparateur de faisceau (13), qui sépare dans chaque cas le rayonnement laser (4, 5) des émetteurs laser (3) en un rayonnement de référence (14) et en un rayonnement lumineux (15, 22), dans lequel le rayonnement lumineux (15, 22) frappe l'objet (2) à mesurer, est réfléchi par l'objet (2) sous forme de rayonnement d'objet (23a, 23b) et interfère avec le rayonnement de référence (14),
- un détecteur (19) qui enregistre le motif d'interférence résultant de l'interférence du rayonnement de référence (14) et du rayonnement d'objet (23a, 23b), et
- un dispositif d'analyse (26) pour analyser le motif d'interférence enregistré, et qui est connecté au détecteur (19),
- au moins deux des émetteurs laser (3) émettant un rayonnement laser (4) dans le spectre non visible et,
- le dispositif d'analyse (26) étant conçu pour enregistrer l'objet (2) en trois dimensions sur la base des motifs d'interférence du rayonnement laser (4) dans le spectre non visible,
**caractérisé en ce que** :
- au moins l'un des émetteurs laser (3) est un laser couleur (3b) émettant un rayonnement laser coloré (5) ; et
- le dispositif d'analyse (26) est en outre conçu pour déterminer la couleur de l'objet (2) à partir de l'intensité du rayonnement d'objet coloré (23b) réfléchi par l'objet (2) ;
- les émetteurs laser (3) sont disposés en deux réseaux d'émetteurs (7, 9) ;
- les émetteurs laser (3a), qui émettent un rayonnement laser (4) dans le spectre non visible, font partie d'un premier réseau d'émetteurs (7) et l'au moins un laser couleur (3b) fait partie d'un second réseau d'émetteurs (9) ; et
- l'au moins un laser couleur (3b) est disposé dans le second réseau d'émetteurs (9) à un emplacement (11) associé dans le premier réseau d'émetteurs (7) à un emplacement (12) inoccupé destiné à un émetteur laser (3), ou à un émetteur laser (3) qui n'émet pas.

2. Dispositif selon la revendication 1, **caractérisé en ce que** l'au moins un laser couleur (3b) émet un rayonnement laser (5) comportant l'une des couleurs primaires.

3. Dispositif selon l'une des revendications précédentes, **caractérisé en ce que** l'au moins un laser couleur (3b) émet de la lumière bleue ou de la lumière verte.

4. Dispositif selon la revendication 1, **caractérisé en ce que** le dispositif comprend au moins quatre émetteurs laser (3), au moins deux émetteurs laser (3) étant conçus en tant que lasers couleur (3b), dont l'un émet de la lumière bleue et l'autre émet de la lumière verte.

5. Dispositif selon la revendication 1, **caractérisé en ce que** le dispositif comprend au moins cinq émetteurs laser (3), au moins trois émetteurs laser (3) étant conçus en tant que lasers couleur (3b), dont un premier émet de la lumière bleue, un deuxième émet de la lumière verte et un troisième émet de la lumière rouge.

6. Dispositif selon l'une des revendications précédentes, **caractérisé en ce que** le dispositif (1) comprend une unité optique (27) munie de quatre lentilles (28) et du séparateur de faisceau (13), les lentilles (28) entourant le séparateur de faisceau (13) dans un plan, et les deux réseaux d'émetteurs (7, 9) et les lentilles (28) étant disposés de sorte que le rayonnement de référence (14) de chaque émetteur laser (3) sort de l'unité optique (27) parallèlement aux autres et que le rayonnement lumineux (15, 22) de chaque émetteur laser (3) sort de l'unité optique (27) parallèlement aux autres.

7. Dispositif selon l'une des revendications précédentes, **caractérisé en ce que** le dispositif (1) comprend un réseau de microlentilles (32) conçu pour modifier l'aperture du rayonnement lumineux (15, 22) de manière à ce que le rayonnement lumineux (15, 22) frappe l'objet en une bande lumineuse (21).

8. Dispositif selon l'une des revendications précédentes, **caractérisé en ce que** le dispositif (1) comprend en outre :
- un réseau de phase (29) qui sépare dans chaque cas le rayonnement lumineux (15) des émetteurs laser (3a) émettant un rayonnement laser (4) dans le spectre non visible en deux faisceaux (30, 31), de sorte que le rayonnement lumineux (15) frappe l'objet (2) en deux bandes lumineuses (21) et
- un réseau de microlentilles (32) qui dévie le rayonnement laser coloré (5) de l'au moins un laser couleur (3b) à travers le réseau de microlentilles (32) de manière à ce que l'une des bandes lumineuses (21) soit colorée.

9. Dispositif selon la revendication 8, **caractérisé en ce que** le réseau de phase (29) est conçu de manière à ce que le rayonnement laser coloré (5) passe dans le réseau de phase (29) en restant quasiment inchangé.

10. Dispositif selon la revendication 7, **caractérisé en ce que** l'au moins un laser couleur (3b) est positionné de manière à ce qu'en dehors de l'axe optique d'une lentille (33) du réseau de microlentilles (32), le rayonnement laser coloré (5) frappe ladite lentille de sorte que le rayonnement laser coloré (5) est dévié par la lentille (33).

11. Dispositif selon l'une des revendications précédentes, **caractérisé en ce que** le dispositif (1) est un scanner dentaire dimensionné de manière à pouvoir être inséré au moins partiellement dans la cavité bucale d'un patient.

12. Utilisation du dispositif selon l'une des revendications précédentes en tant que scanner dentaire pour reconnaître la couleur des dents par référence à un nuancier, en particulier au nuancier Vita.

13. Procédé de reconnaissance de la structure 3D d'un objet (2) et de sa couleur à l'aide d'un dispositif (1), comprenant
- au moins trois émetteurs laser (3),
- des dispositifs optiques (13, 18, 20, 27, 29, 32) dont au moins l'un est un séparateur de faisceau (13),
- un détecteur (19) et
- un dispositif d'analyse (26),
dans lequel un rayonnement laser (4) est émis dans le spectre non visible au moyen d'au moins deux émetteurs laser (3a) et un rayonnement laser coloré (5) est émis au moyen d'au moins un autre émetteur laser (3b),
dans lequel le rayonnement laser (4, 5) de chaque émetteur laser (3) est séparé en un rayonnement de référence (14) et en un rayonnement lumineux (15, 22),
dans lequel le rayonnement lumineux (15, 22) frappe l'objet (2) à mesurer, est réfléchi par l'objet (2) sous forme de rayonnement d'objet (23a, 23b) et interfère avec le rayonnement de référence (14),
dans lequel le motif d'interférence résultant de l'interférence du rayonnement de référence (14) et du rayonnement d'objet (15, 22) est enregistré au moyen du détecteur (19),
dans lequel l'objet (2) est enregistré en trois dimensions sur la base des motifs d'interférence du rayonnement laser (4) dans le spectre non visible à l'aide du dispositif d'analyse (26), et
dans lequel la couleur de l'objet (2) est déterminée par le dispositif d'analyse (26) à partir de l'intensité du rayonnement d'objet coloré (23b) réfléchi par l'objet (2) ;
dans lequel
- les émetteurs laser (3) sont disposés en deux réseaux d'émetteurs (7, 9) ;
- les émetteurs laser (3a), qui émettent un rayonnement laser (4) dans le spectre non visible, font partie d'un premier réseau d'émetteurs (7) et l'au moins un laser couleur (3b) fait partie d'un second réseau d'émetteurs (9) ; et
- l'au moins un laser couleur (3b) est disposé dans le second réseau d'émetteurs (9) à un emplacement (11) associé dans le premier réseau d'émetteurs (7) à un emplacement (12) inoccupé destiné à un émetteur laser (3), ou à un émetteur laser (3) qui n'émet pas.
